# EUROPÄISCHE PATENTSCHRIFT

(11) **EP 1 703 192 B1**
(45) Veröffentlichungstag und Bekanntmachung des Hinweises auf die Patenterteilung: **14.08.2013**
(21) Anmeldenummer: 05005539.1
(22) Anmeldetag: 15.03.2005
(51) Int. Cl.: F16L 37/113

(54) **Bajonettverbindung**
Bayonet coupling
Raccord à baïonnette

(43) Veröffentlichungstag der Anmeldung: 20.09.2006
(73) Patentinhaber: Grundfos Management A/S, 8850 Bjerringbro (DK)
(72) Erfinder: Jensen, Olav, 8800 Viborg (DK)
(74) Vertreter: Vollmann, Heiko

(56) Entgegenhaltungen:
- EP-A- 1 217 310
- US-A- 3 537 730

## Beschreibung

Die Erfindung betrifft eine Bajonettverbindung mit den im Oberbegriff des Anspruch 1 angegebenen Merkmalen. Eine derartige Bajonettverbindung ist aus der US-A-3 537 730 bekannt.

Bajonettverbindungen der eingangs genannten Art dienen typischerweise zum Herstellen von fluidleitenden Verbindungen, beispielsweise von Rohrleitungen untereinander, von Rohrleitungen mit Vorrichtungen wie beispielsweise Baueinheiten von Kompaktheizungsanlagen (Heizthermen) oder auch zum Einsatz einer Baugruppe in eine Vorrichtung wie beispielsweise eines Differenzdruckaufnehmers in einer Baueinheit für eine Kompaktheizungsanlage.

Bei derartigen fluidführenden Bajonettverbindungen zählt es insbesondere im Zusammenhang mit Kompaktheizungsanlagen zum Stand der Technik, Anschlussstutzen und Anschlusskörper so auszubilden, dass sie ineinander einsteckbar und dann durch Drehen um deren Einsteckachse zueinander in Ensteckrichtung verriegelbar sind. Eine solche Bajonettverbindung setzt jedoch stets die freie Drehbarkeit eines der beiden Bauteile voraus, was häufig nicht gegeben ist.

Für letzteren Anwendungsfall ist es bekannt, statt einer Bajonettverbindung eine alternative Formschlussverbindung zu wählen, bei der seitlich über Ausnehmungen im Anschlussstutzen ein Metallbügel eingefügt wird, welcher den im Anschlussstutzen steckenden Anschlusskörper formschlüssig in Einsteckrichtung verriegelt. Nachteilig bei diesen Formschlussverbindungen mittels Bügel ist allerdings, dass im Anschlussstutzen Ausnehmungen für den quer zur Einsteckrichtung einfügbaren Bügel vorgesehen sein müssen. Wenn solch ein Anschlussstutzen an einer Baueinheit für eine Kompaktheizungsanlage vorgesehen sein soll, die regelmäßig als Kunststoffspritzgussteil ausgebildet ist, dann bedingt dies, dass für die Herstellung ein Werkzeug erforderlich ist, welches zumindest in Teilen quer zur Stutzenlängsachse verfahrbar ist. Aufgrund der immer kompakteren Bauweise und Komplexität dieser Bauteile ist dies häufig jedoch nicht oder nur mit vergleichsweise hohem Aufwand möglich.

Aus US 3,537,730 A zählt eine Bayonettverbindung zum Stand der Technik, die aus vier Bauteilen aufgebaut ist, einem Anschlusskörper, einem Anschlussstutzen und einem Riegelkörper sowie einer Riegelhülse, die gegen Federkraft verschiebbar und um Achsrichtung drehbar auf dem Anschlussstutzen angeordnet ist. Der Anschlusskörper ist in den Anschlussstutzen einsteckbar und in Einsteckrichtung formschlüssig verriegelbar, indem der Riegelkörper zwischen einem nach innen ragenden Vorsprung des Anschlussstutzens und einem am Außenumfang des Anschlusskörpers angeordneten nach außen ragenden Vorsprung formschlüssig angebracht ist. Um zu verhindern, dass sich die Verbindung wieder löst, ist eine Hülse vorgesehen, welche die verbleibende Axial-öffnung, durch welche der Riegelkörper entfernbar ist, verschließt.

Diese Bayonettverbindung ist aus vier Bauteilen sowie einer Feder und einem Dichtelement gebildet, was aufwändig ist. Die Hülse ist zudem nicht von dem anschlussseitigen Ende des Anschlussstutzens sondern nur von der Rückseite montierbar, weshalb diese Bayonettverbindung an einer Baueinheit für eine Kompaktheizungsanlage nicht oder mit hohem fertigungs- und montagetechnischen Aufwand einsetzbar ist. Auch muss der Riegelkörper von dem dem anschlussseitigen Ende abgewandten Ende des Anschlusskörpers montiert werden, was grundsätzlich nachteilig ist.

Vor diesem Hintergrund liegt der Erfindung die Aufgabe zugrunde, eine Bayonettverbindung zu schaffen, die einfacher herstellbar und insbesondere im Zusammenhang mit einer Baueinheit einer Kompaktheizungsanlage einfach montierbar ist.

Diese Aufgabe wird gemäß der Erfindung durch die in Anspruch 1 angegebenen Merkmale gelöst. Vorteilhafte Ausgestaltungen der Erfindung ergeben sich aus den Unteransprüchen, der nachfolgenden Beschreibung und der Zeichnung.

Grundgedanke der vorliegenden Erfindung ist es, die Bajonettverbindung so auszubilden, dass ein gesonderter zwischen Anschlusskörper und Anschlussstutzen eingliederbarer Riegelkörper vorgesehen ist, der durch einfaches Drehen um die Einsteckachse ver- bzw. entriegelbar ist. Der Vorteil der erfindungsgemäßen Bajonettverbindung liegt also darin, dass die zu verbindenden Teile, nämlich der Anschlussstutzen und der Anschlusskörper - dieser kann natürlich auch ein stutzenähnliches Gebilde sein - nur in Richtung ihrer Längsachse zueinander bewegbar sein müssen und die Verriegelung durch den beispielsweise bügelförmig ausgebildeten Riegelkörper erfolgt, welcher zwischen Anschlussstutzen und Anschlusskörper eingegliedert ist und der durch Drehen um die Einsteckachse die Bauteile zueinander verriegelt bzw. entriegelt. Dadurch, dass der Riegelkörper zwischen Anschlusskörper und Anschlussstutzen eingegliedert ist, also Riegelkörper und Anschlusskörper in den Anschlussstutzen eingreifen, kann der Anschlussstutzen an seiner Außenseite völlig glattwandig und ohne Hinterschneidung ausgebildet sein, was insbesondere bei dem eingangs genannten Anwendungsbereich, (Baueinheit für eine Kompaktheizungsanlage) oder anderen komplexen Spritzgussbauteilen von besonderem Vorteil ist, da der Werkzeugaufbau wesentlich vereinfacht wird. Der beim Spritzengießen im Anschlussstutzen befindliche Kern muss ohnehin vorgesehen sein und vor dem Entformen gezogen werden. Bei geeigneter Formgebung kann dies in ein facher Weise gegebenenfalls nach Drehen des Kerns um seine Ziehachse erfolgen.

Unter Bajonettverbindungen im Sinne der vorliegenden Erfindung wird eine Verbindung verstanden, bei der eine formschlüssige Verbindung durch eine translatorische Bewegung einerseits und eine rotatorische Bewegung andererseits erreicht wird, typischerweise wird zum Verbinden zunächst die translatorische hier Einsteckbewegung vom Anschlusskörper in den Anschlussstutzen erfolgen, wonach zum Verriegeln die rotatorische Bewegung, nämlich das Drehen des Verriegelungskörpers erfolgt. Das Lösen der Verbindung erfolgt in umgekehrter Reihenfolge.

Gemäß der Erfindung weist der Anschlussstutzen mindestens einen nach innen ragenden Vorsprung und der Anschlusskörper mindestens einen am Außenumfang angeordneten und nach außen ragenden Vorsprung auf, die so zueinander angeordnet sind, dass der Anschlusskörper in den Anschlussstutzen einsteckbar ist, ohne dass die gegenseitigen Vorsprünge kollidieren. Die Vorsprünge dienen erst in Verbindung mit dem Riegelkörper zur formschlüssigen Festlegung vom Anschlusskörper im Anschlussstutzen.

Vorteilhaft ist es, wenn der nach außen ragende Vorsprung des Anschlusskörpers durch einen umlaufenden Ringwulst gebildet ist. Solche Ringwülste können auf einfache Weise gegebenenfalls sogar Vorort an vorhandenen Metallrohren durch Stauchen oder andere geeignete Kaltverformungen gebildet werden, so dass die erfindungsgemäße Bajonettverbindung auch mit Anschlusskörpem in Form von Rohrenden möglich ist, die Vorort vorhanden sind und lediglich mit einem geeigneten Werkzeug angepasst werden müssen. Der umlaufende Wulst erlaubt zu dem eine sichere Übertragung von Axialkräften und erleichtert den axialen Fügevorgang da keine Ecken und Kanten gebildet sind, die miteinander verhaken könnten.

In analoger Weise ist es besonders vorteilhaft, auch den nach innen ragenden Vorsprung durch einen entsprechenden Ringwulst zu bilden. Hierbei sind jedoch abschnittsweise Unterbrechungen erforderlich, um den Riegelkörper zusammen mit dem Anschlusskörper soweit in den Anschlussstutzen einstecken zu können, bis der Ringwulst des Anschlusskörpers in Einsteckrichtung hinter dem Vorsprung bzw. dem durchbrochenen Ringwulst des Anschlussstutzens angeordnet ist, ohne dass dieser an dem nach innen ragenden Vorsprung hängen bleibt.

Um ein Fügen von Anschlusskörper und Anschlussstutzen durch einfaches Ineinanderstecken zu ermöglichen, ist es zweckmäßig, den Innendurchmesser des nach innen ragenden Ringwulstes so zu dimensionieren, dass dieser größer ist als der Außendurchmesser des nach außen ragenden Ringwulstes am Anschlusskörper. Dann nämlich kann der Anschlusskörper in den Anschlussstutzen eingesteckt werden, und zwar so weit bis sein Ringwulst in Einsteckrichtung gesehen hinter dem Ringwulst des Anschlussstutzens liegt.

Gemäß der Erfindung ist der Riegelkörper so ausgebildet, dass er den Anschlusskörper seitlich um etwa 180° mit geringem Spiel umgreift und zu einer Seite an dem nach außen ragenden Vorsprung des Anschlusskörpers, vorzugsweise des Ringwulstes anliegt. Dabei ist am Riegelkörper mindestens ein radial nach außen ragender Vorsprung vorgesehen, der durch Drehen des Riegels um die gemeinsame Achse von Anschlusskörper und Anschlussstutzen in eine den Vorsprung des Anschlussstutzens hintergreifende Stellung bewegt. Dabei umgreift der Riegelkörper den Anschlussköper um etwas mehr als 180°, dann nämlich kann dieser bügelförmig ausgebildete Riegelkörper durch elastische Aufweitung des Bügels von der Seite auf den Anschlusskörper derart aufgeschoben werden, dass der Bügel durch elastisches Einfedern relativ fest auf dem Anschlusskörper sitzt, so dass er beim Einstecken des Anschlusskörpers in den Anschlussstutzen nicht gesondert gehalten werden muss. Die Dimensionierung erfolgt zweckmäßigerweise so, dass einerseits der Riegelkörper nach seitlichem Aufstecken fest auf dem Anschlusskörper sitzt, andererseits jedoch nach Einstecken der Bauteile in den Anschlussstutzen mit vergleichsweise geringem Kraftaufwand in die verriegelnde Stellung gedreht werden kann.

Vorzugsweise weist der den Riegelkörper bildende Bügel zwei etwa diametral gegenüber angeordnete radial gerichtete Vorsprünge auf, die so angeordnet sind, dass sie beim Einstecken in den Anschlussstutzen durch die anschlussstutzenseitig entsprechend vorgesehenen Unterbrechung im Ringwulst durchsteckbar sind und beim nachfolgenden Drehen des Riegelkörpers um die Einsteckachse den Anschlusskörper gegenüber dem Anschlussstutzen formschlüssig verriegeln.

Insbesondere wenn mit der erfindungsgemäßen Bajonettverbindung eine fluidführende Leitungsverbindung hergestellt werden soll, ist es zweckmäßig, nicht nur für den mechanischen Verbund, sondern auch für die Dichtheit Sorge zu tragen. Hierzu sind in Weiterbildung der Erfindung Dichtmittel zwischen Anschlusskörper und Anschlussstutzen vorgesehen. Diese können am einfachsten durch einen nahe dem freien Ende des Anschlusskörpers angeordneten umlaufenden Dichtring gebildet sein. Dabei kann entweder in einer Nut des Anschlusskörpers ein O-Ring vorgesehen sein oder aber ein einfacher Dichtring an dem umlaufenden Wulst abgestützt sein, der gegenüber einer entsprechenden Stirnfläche im Anschlussstutzen abdichtet. Bei einer solchen Anordnung ist es zweckmäßig, den nach außen ragenden umlaufenden Wulst des Anschlusskörpers nicht am freien Ende der Rohrleitung vorzusehen, sondem mit geringem Abstand hierzu, um in diesem Bereich die Dichtung eingliedern zu können.

Die erfindungsgemäße Bajonettverbindung kann vorteilhaft für fluidleitende Rohrverbindungen eingesetzt werden, besonders günstig bildet sie Teil einer aus Kunststoffspritzgussteilen aufgebauten Baueinheit für ein Kompaktheizungsaggregat. Dann wird der Anschlussstutzen vorteilhaft als Spritzgussteil einstückig mit der entsprechenden Baueinheit bzw. wenn die Baueinheit mehrteilig aufgebaut ist, mit dem entsprechenden Bauteil ausgebildet werden, was den eingangs dargelegten vereinfachten Werkzeugaufbau mit sich bringt.

So kann es besonders vorteilhaft sein, die zu einer Seite gerichteten Anschlussstutzen der Baueinheit oder eines Teils der Baueinheit so auszubilden, dass sie jeweils Teil einer erfindungsgemäßen Bajonettverbindung bilden.

Vorteilhaft wird auch der Riegelkörper beispielsweise in Form eines bügelartigen Gebildes als Kunststoffspritzgussteil ausgebildet, und zwar zweckmäßigerweise so, dass er zumindest in der verriegelnden Endstellung vorzugsweise hörbar und fühlbar rastet. Die erfindungsgemäße Bajonettverbindung wird dabei vorteilhaft für Verbindungen innerhalb der Kompaktheizungsanlage eingesetzt, also bei Verbindungen, bei denen typischerweise sowohl Anschlusskörper als auch Anschlussstutzen jeweils Teil eines komplexen Spritzgussbauteils bilden.

Die erfindungsgemäße Bajonettverbindung kann jedoch auch im Zusammenhang mit vorhandenen Metallrohren angewendet werden, wenn diese zur Bildung des Wulstes entsprechend umgeformt werden, was mit Hilfe eines geeigneten Werkzeugs Vorort gegebenenfalls von Hand erfolgen kann.

Die Erfindung ist nachfolgend anhand von in der Zeichnung dargestellten Ausführungsbeispielen näher erläutert. Es zeigen
- Fig. 1: in vereinfachter perspektivischer Darstellung ein Bauteil einer Baueinheit einer Kompaktheizungsanlage mit einem Anschlussstutzen, ein dazu in Einsteckrichtung mit Abstand angeordnetes Rohrende als Anschlusskörper und einen Riegelkörper,
- Fig. 2: die Bauteile gemäß Fig. 1 nach Fügen und vor dem Verriegeln der Bajonettverbindung in Darstellung nach Fig. 1,
- Fig. 3: in vergrößerter Darstellung eine perspektivische Ansicht auf das freie Ende des Anschlusskörpers mit darauf sitzenden Riegelkörper,
- Fig. 4: in stark vergrößerter Darstellung einen Anschlussstutzen mit eingesteckten Anschlusskörper und noch nicht eingefügten Riegelkörper,
- Fig. 5: eine Einzelheit betreffend die Verrastung zwischen Riegelkörper und Anschlussstutzen am Ende des Verriegelvor gangs,
- Fig. 6: den Riegelkörper in anderer Darstellung zur Veranschaulichung der Rastfunktion und
- Fig. 7: in perspektivischer Darstellung zwei Bauteile einer anderen Baueinheit einer Kompaktheizungsanlage und deren Verbindung durch das erfindungsgemäße Bajonett.

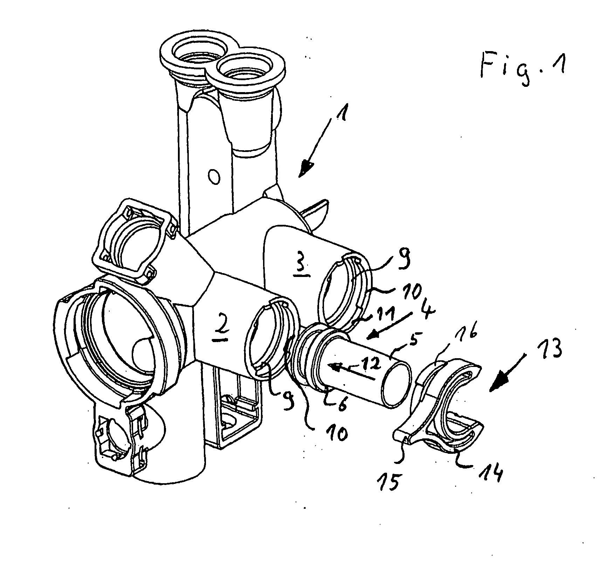

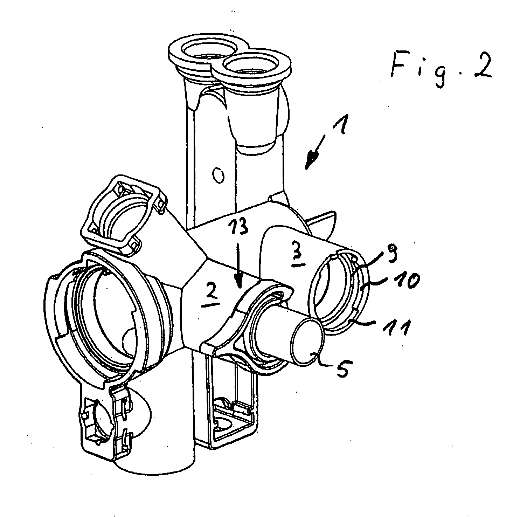

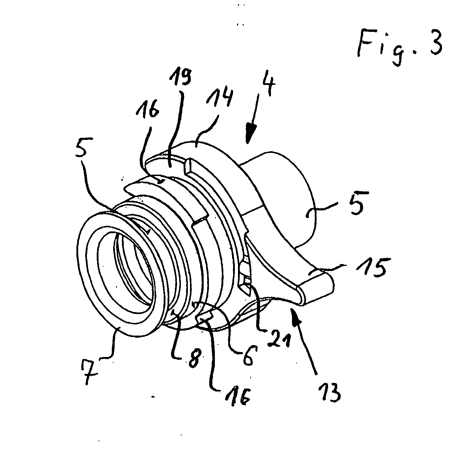

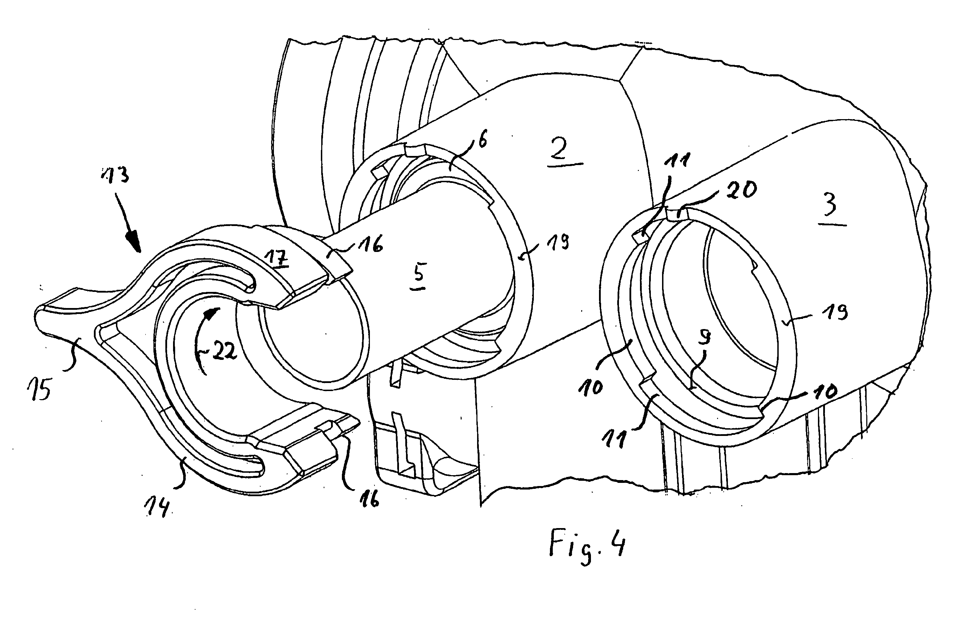

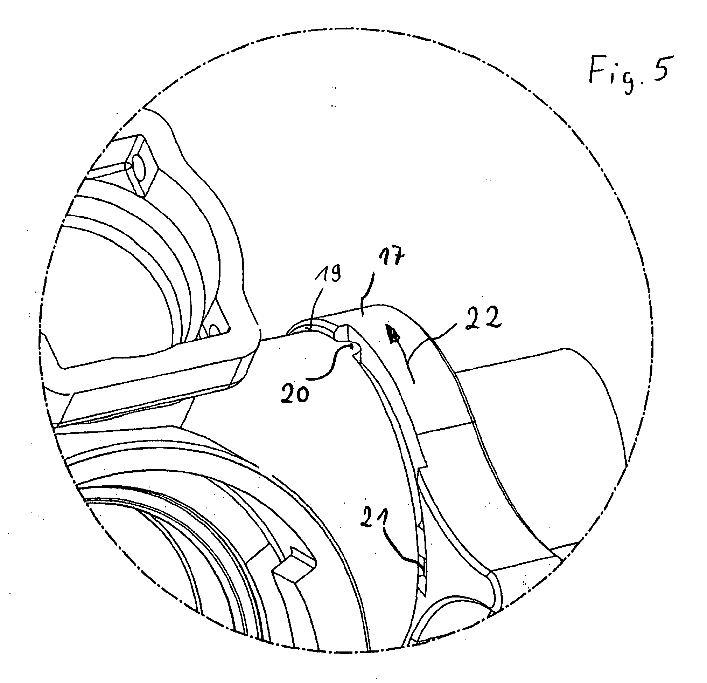

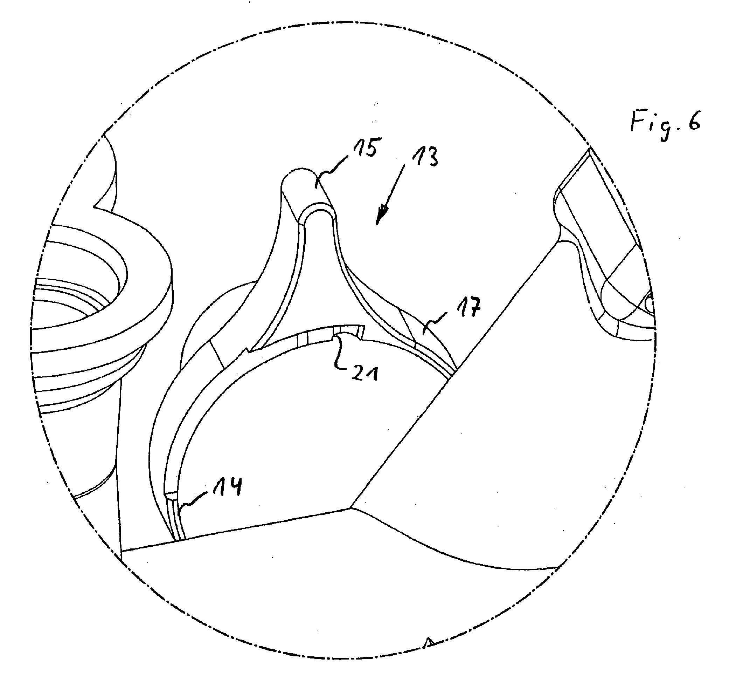

Die anhand der Figuren 1 bis 6 dargestellte Bajonettverbindung ist anhand eines Bauteils 1 in Form eines Spritzgusskunststoffbauteils 1 dargestellt und erläutert, welches Teil einer Baueinheit einer Kompaktheizungsanlage bildet, wie sie beispielsweise in der europäischen Patentanmeldung 03 025 082.3 der Anmelderin beschrieben ist, auf die insoweit insbesondere hinsichtlich der konstruktiven und funktionellen Ausführungen Bezug genommen wird. Das hier mit 1 gekennzeichnete Bauteil entspricht dabei in seiner Funktion im Wesentlich dem in der vorgenannten Patentanmeldung in Fig. 3 rechtseitigen Teil der Baueinheit, mit zwei seitlichen Anschlüssen für den Wasserspeicher.

Das Bauteil 1 weist zwei nebeneinander angeordnete Anschlussstutzen 2 und 3 auf, die identisch ausgebildet und zur Aufnahme eines hier nur beispielhaft dargestellten Anschusskörpers 4 vorgesehen sind. Der Anschlusskörper 4 ist hier nur beispielhaft dargestellt für ein beliebiges Rohrende oder einen in einen Anschlussstutzen 2 einzubajonetttierenden Körper. Bezogen auf das Bauteil 1 stellt der Anschlusskörper 4 das freie Ende einer zum Wasserspeicher innerhalb der Kompaktheizungsanlage führenden Leitung dar.

Der Anschlusskörper 4 besteht aus einem rohrförmigen Teil 5, der mit geringem Abstand vor seinem freien Ende mit einem umlaufenden ringförmigen Wulst 6 versehen ist, welcher sich vom Umfang des rohrförmigen Teils 5 radial nach außen erhebt, so wie dies anhand der Figuren 1 und 3 entnehmbar ist. Der rohrförmige Teil 5 erstreckt sich über den ringförmigen Wulst 6 bis zum freien Ende ein kleines Stück hinaus (siehe Fig. 3) und bildet dort eine radiale Haltefläche für einen Dichtring 7, dessen axiale Anlagefläche durch die zum Rohrende weisende Seite 8 des ringförmigen Wulstes 6 gebildet ist. Bei dem anhand der Figuren 1 bis 6 dargestellten Anschlusskörper 4 ist dieser als Kunststoffspritzgussteil ausgebildet. Ein solcher Anschlusskörper 4 kann jedoch ohne weiteres auch aus einem ortsfesten vorhandenen Metallrohr gebildet werden, in dem der ringförmige Wulst 6 durch Stauchen nahe dem freien Rohrende herausgebildet wird. Dies kann mit einer entsprechenden Vorrichtung erfolgen, solche Umformwerkzeuge zählen insbesondere auch zum Verbinden von Rohrleitungen zum Stand der Technik.

Die Anschlussstutzen 2, 3 sind, wie insbesondere Fig. 1verdeutlicht, außen völlig glattwandig und ohne Hinterschneidung ausgebildet. Innen sind sie abgestuft ausgebildet, so dass sich eine umlaufende innere Stirnfläche 9 ergibt, welche zur Anlage des Dichtrings 7 dient. Mit Abstand zu dieser Stimfläche 9 weisen die Anschlussstutzen 2 nahe ihrem äußeren (eingangsseitigen) Ende einen nach innen weisenden Vorsprung 10 in Form eines ebenfalls umlaufenden ringförmigen Wulstes auf, der jedoch im Unterschied zu dem ringförmigen Wulst 6 nicht durchgehend sondern zwei sich über ca. 40 ° erstreckende und diametral gegenüber angeordnete Unterbrechungen 11 aufweist.

Die Dimensionierung von Anschlussstutzen 2, 3 und Anschlusskörper 4 ist so, dass der Anschlusskörper 4, so wie er anhand von Fig. 1 vor dem Anschlussstutzen 2 dargestellt ist, in diesen einschiebbar bzw. einsteckbar ist. Die Einsteckrichtung ist mit 12 gekennzeichnet und liegt auf der übereinstimmenden Längsachse von Anschlussstutzen 2 und Anschlusskörper 4. Der rohrförmige Teil 5 ist insbesondere in seinem über den ringförmigen Wulst 6 hinausragenden Bereich so dimensioniert, dass er bis in den durch die Stirnfläche 9 begrenzten Teil des Anschlussstutzens 2 einschiebbar ist, bis der Dichtring 7 zwischen der Stirnfläche 9 und der Seite 8 des ringförmigen Wulstes 6 anliegt. Weiterhin ist der ringförmige Wulst 6 von seinem Außendurchmesser so dimensioniert, dass er kleiner als der Innendurchmesser des ringförmigen Wulstes 10 ist, so dass dieser mit Spiel durch den durch den ringförmigen Wulst 10 begrenzten Freiraum hindruchführbar ist.

Um den Anschlusskörper 4 innerhalb eines Anschlussstutzen 2 oder 3 formschlüssig in Richtung 12 oder Gegenrichtung festlegen zu können, ist ein Verriegelungskörper 13 vorgesehen, der einem Bügel 14 mit einem Griffteil 15 aufweist. Der Verriegelungskörper 13 ist einstückig als Kunststoffspritzgussteil ausgebildet und weist zwei seitlich am Bügel 14 diametral angeordnete Vorsprünge 16 auf, die sich wulstförmig auf der Außenseite des Bügels 14 versetzt neben dem Griff 15 erstrecken, und zwar jeweils über einen Winkel der kleiner ist als der über den sich die Unterbrechungen 11 in den Anschlussstutzen erstrecken. Der Bügel 14 ist so dimensioniert, dass er mit seiner Innenkontur zu den Außenabmessungen des rohrförmigen Teils 5 korrespondiert. Er erstreckt sich über einen Winkel von etwas mehr als 180°, so dass beim Aufsetzen des Bügels 14 auf den rohrförmigen Teil 5 des Anschlusskörpers 4, was aus einer Richtung quer zur Richtung 12 erfolgt, sich die Schenkel federnd aufweiten um dann leicht vorgespannt auf dem rohrförmigen Teil 5 so zur Anlage zu kommen, dass der Verriegelungskörper 13 dort fixiert, aber doch bewegbar ist. Der Bügel 14 wird dabei so auf den Anschlussköper 4 aufgeschoben, dass die Vorsprünge 16 mit ihrer einen Seite an der vom Dichtring 7 abgewandten Seite des ringförmigen Wulstes 6 zur Anlage kommen. Es ist darauf zu achten, dass die Vorsprünge 16 so angeordnet sind, dass sie beim Einstecken mit den Unterbrechungen 11 fluchten.

Es wird dann der Anschlusskörper 4 mit dem darauf sitzenden Verriegelungskörper 13 in Richtung 12 in den Anschussstutzen 2 eingesteckt. Dabei wird sowohl der Anschlusskörper 4 in Richtung 12 als auch nachfolgend der Vemegelungskörper 13 in Richtung 12 gedrückt, bis der seitlich radial über die Vorsprünge 6 hinausragende Teil 17 zur Anlage an der vorderen Stirnseite 19 des Anschlussstutzens 2 kommt. Um den nun im Anschlussstutzen 2 steckenden Anschlusskörper 4 formschlüssig entgegen der Richtung 12 zu sichern wird der Verriegelungskörper 13 durch Drehen in Richtung 22 um die Längsachse von Anschlusskörper 4 und Anschlussstutzen 2 in seine diese Bauteile zueinander verriegelnde Stellung gebracht. Dabei gelangen die Vorsprünge 16 zwischen die vom Dichtring 7 abgewandte Seite des ringförmigen Wulstes 6 des Anschlusskörpers 4 einerseits und den ringförmigen Wulst 10 des Anschlussstutzens 2 andererseits. Das Lösen der Verbindung erfolgt entsprechend in umgekehrter Richtung und Reihenfolge.

Um dem Monteur, der den Anschlusskörper 4 mit dem Anschlussstutzen 2 verbinden soll, zu signalisieren, wann die Bajonettverbindung ihre bestimmungsgemäße Position, in der ein selbsttätiges Lösen nicht mehr möglich ist, erreicht hat und um ein selbsttätiges Lösen, wie dies beispielsweise durch Schwingungen möglicherweise auftreten könnte, zuverlässig zu verhindern, ist eine Rastverbindung zwischen der Stirnseite 19 des Anschlussstutzens 2 und der darauf gleitenden gegenüberliegenden Seite des Teils 17 des Verriegelungskörpers 13 vorgesehen. Der Teil 17 weist hierzu eine entsprechende Ausnehmung 21 auf, die mit einer Rastnase 20 an der Stirnseite 19 des Anschlussstutzens 2 zusammenwirkt. Der Bügel 14 ist also bei der Montage solange in Richtung 22 zu drehen, bis nach Überwindung einer erhöhten Kraft die Rastnase 20 innerhalb der Ausnehmung,21 zur Anlage kommt. In dieser Stellung ist ein selbsttätiges Lösen nicht mehr möglich, da der Widerstand zur Überwindung der Rastverbindung größer als die im üblichen Betrieb zu erwartenden beispielsweise durch Schwingungen erzeugten Kräfte sind.

Die vorbeschriebene Bajonettverbindung ist so dimensioniert, dass in letztgenannter verriegelter Stellung auch der Dichtring 7 zwischen der Stirnfläche 9 einerseits und der Seite 8 des ringförmigen Wulstes andererseits dichtend eingespannt ist. Es können gegebenenfalls in den aufeinander gleitenden Stirnflächen einer oder mehrerer Bajonettteile noch Abschrägungen vorgesehen sein, welche dafür sorgen, dass mit zunehmender Drehung des Verriegelungskörper 13 in Drehrichtung 22 der axiale Druck auf den Dichtring 7 weiter erhöht wird.

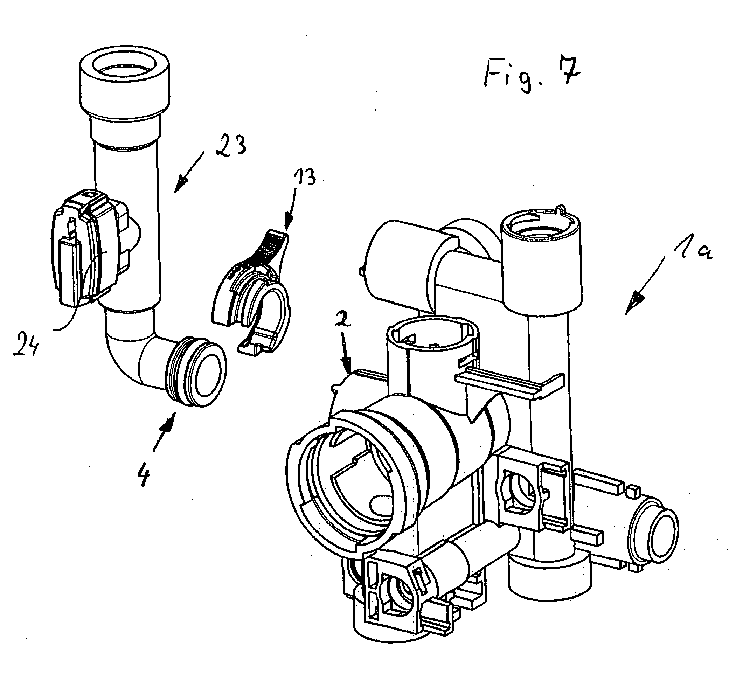

Die Bajonettverbindung ist anhand einer Leitungsverbindung mit dem Bauteil 1 dargestellt worden. Diese Bajonettverbindung kann jedoch auch zur Engliederung von Bauteilen, beispielsweise eines Ventils, eines Differenzdrucksensors oder dergleichen Verwendung finden. Bei der anhand von Fig. 7 dargestellten Ausführung dient die vorbeschriebene Bajonettverbindung dazu, ein Bauteil 1α einer Baueinheit mit einem Rohrabschnitt 23 mit einem darin eingegliederten Differenzdrucksensor 24 anzuschließen. Der Differenzdrucksensor 24 bildet Teil einer Durchflussmesseinrichtung, wie sie im Einzelnen in der europäischen Patentanmeldung 03 025 082.3 beschrieben ist, bei der der Durchfluss anhand des Druckes vor bzw. hinter einer im Rohr angeordneten Obstruktion ermittelt wird. Dieser Rohrabschnitt 23 sitzt hier in einer Leitung des Primärwärmekreislaufes, also einer zum Primärwärmetauscher führenden Leitung.

Wie die Anordnung verdeutlicht, handelt es sich hierbei ebenfalls um eine Verbindung, bei der eine Bewegung der Bauteile zueinander nur in engen Grenzen möglich ist, sicherlich jedoch keine Drehbewegung der Bauteile zueinander, da der Rohrabschnitt 23 bei der Montage üblicherweise zunächst mit dem Primärwärmetauscher verbunden wird, während das Bauteil 1α zu einer Baueinheit mit weiteren Bauteilen zusammengefügt wird. Die Bajonettverbindung kann somit bei nur geringem Spiel in Richtung der Einsteckrichtung gefügt werden, ohne dass eine Bewegbarkeit der zu fügenden Teile erforderlich ist, was insbesondere für den vorliegenden Anwendungsfall besonders günstig ist. Die Querbewegung in Einsteckrichtung kann durch den Rohrabschnitt 23 bzw. die daran anschließende Leitung elastisch erfolgen, da es sich bei der zum Primärwärmetauscher führenden Leitung um eine vergleichsweise lange seitlich mit Freiraum angeordnete Leitung handelt, wo hingegen das Bauteil 1α, wenn die Baueinheit vollständig montiert ist, unverrückbar und fest innerhalb der Kompaktheizungsanlage angeordnet ist.

### Bezugszeichenliste

- 1: - Bauteil einer Baueinheit
- 1a: - Bauteil in Fig. 7
- 2: - Anschlussstutzen
- 3: - Anschlussstutzen
- 4: - Anschlusskörper
- 5: - rohrförmiger Teil
- 6: - ringförmiger Wulst von 4
- 7: - Dichtring
- 8: - Seite von 6
- 9: - Stirnfläche
- 10: - ringförmiger Wulst von 2, 3
- 11: - Unterbrechungen im ringförmigen Wulst
- 12: - Einsteckrichtung
- 13: - Verriegelungskörper
- 14: - Bügel
- 15: - Griffteil
- 16: - Vorsprünge
- 17: - Teil von 13
- 19: - Stirnseite von 17
- 20: - Rastnase
- 21: - Rastausnehmung
- 22: - Drehrichtung zum Verriegeln
- 23: - Rohrabschnitt
- 24: - Differenzdrucksensor

## Patentansprüche

1. Bajonettverbindung mit einem rohrförmigen Anschlussstutzen (2, 3) und einem damit formschlüssig verbindbaren Anschlusskörper (4), wobei der Anschlusskörper (4) in den Anschlussstutzen (2, 3) einsteckbar und zumindest in Einsteckrichtung (12) formschlüssig verriegelbar ist und ein Riegelkörper (13) vorgesehen ist, der zwischen Anschlusskörper (4) und Anschlussstutzen (2, 3) diese zueinander verriegelnd eingliederbar ist, wobei der Anschlussstutzen (2, 3) mindestens einen nach innen ragenden Vorsprung (10) und der Anschlusskörper (4) mindestens einen am Außenumfang angeordneten und nach außen ragenden Vorsprung (6) aufweist, an dem der Riegelkörper (13) zu einer Seite anliegt, und wobei am Riegelkörper (13) mindestens ein nach außen ragender Vorsprung (16) vorgesehen ist, und wobei durch Drehen des Riegelkörpers (13) um die gemeinsame Achse von Anschlusskörper (4) und Anschlussstutzen (2, 3) der mindestens eine nach außen ragende Vorsprung (16) des Riegelkörpers (13) in eine den Vorsprung des Anschlussstutzens (2, 3) hintergreifende Stellung bewegbar ist, **dadurch gekennzeichnet, dass** der Riegelkörper (13) so ausgebildet ist, dass er den Anschlusskörper (4) seitlich um etwa 180° mit geringem Spiel umgreift.

2. Bajonettverbindung nach einem der vorhergehenden Ansprüche, **dadurch gekennzeichnet, dass** der nach außen ragende Vorsprung (6) des Anschlusskörpers (4) durch einen umlaufenden Ringwulst (6) gebildet ist.

3. Bajonettverbindung nach einem der vorhergehenden Ansprüche, **dadurch gekennzeichnet, dass** der nach innen ragende Vorsprung (10) durch einen abschnittsweise unterbrochenen Ringwulst (10) gebildet ist.

4. Bajonettverbindung nach einem der vorhergehenden Ansprüche, **dadurch gekennzeichnet, dass** der Innendurchmesser des nach innen ragenden Ringwulstes (10) größer als der Außendurchmesser des nach außen ragenden Ringwulstes (6) ist.

5. Bajonettverbindung nach einem der vorhergehenden Ansprüche, **dadurch gekennzeichnet, dass** am Riegelkörper (13) zwei etwa diametral gegenüber angeordnete Vorsprünge (16) vorgesehen sind und dass anschlussstutzenseitig entsprechend zwei Unterbrechungen (11) im Ringwulst (10) vorgesehen sind, derart, dass der Riegelkörper (13) in den Anschlussstutzen (2, 3) einsteckbar und durch Drehen in diesem verriegelbar ist.

6. Bajonettverbindung nach einem der vorhergehenden Ansprüche, **dadurch gekennzeichnet, dass** zwischen Anschlusskörper (4) und Anschlussstutzen (2, 3) Dichtmittel (7) vorgesehen sind.

7. Bajonettverbindung nach einem der vorhergehenden Ansprüche, **dadurch gekennzeichnet, dass** der Anschlusskörper (4) nahe seinem freien Ende einen umlaufenden Dichtring (7) trägt.

8. Bajonettverbindung nach einem der vorhergehenden Ansprüche, **dadurch gekennzeichnet, dass** der Anschlusskörper (4) durch das freie Ende einer Rohrleitung gebildet ist.

9. Bajonettverbindung nach einem der vorhergehenden Ansprüche, **dadurch gekennzeichnet, dass** der Ringwulst (6) am Anschlusskörper (4) durch Verformen am Ende einer metallischen Rohrleitung gebildet ist.

10. Bajonettverbindung nach einem der vorhergehenden Ansprüche, **dadurch gekennzeichnet, dass** sie Teil einer aus Kunststoffspritzgussteilen aufgebauten Baueinheit für ein Kompaktheizungsaggregats bildet.

11. Baueinheit für ein Kompaktheizungsaggregat mit mindestens einer Bajonettverbindung nach einem der vorhergehenden Ansprüche.

12. Baueinheit nach Anspruch 11, **dadurch gekennzeichnet, dass** Teile der Baueinheit (1a, 23) mittels einer Bajonettverbindung nach einem der Ansprüche 1 bis 10 miteinander verbunden sind.

13. Baueinheit nach Anspruch 11, **dadurch gekennzeichnet, dass** alle zu einer Seite gerichteten Anschlussstutzen (2, 3) für eine Bajonett-verbindung nach einem der Ansprüche 1 bis 10 ausgebildet sind.

## Claims

1. A bayonet connection with a tubular connection nozzle (2, 3) and with a connection body (4) which can be connected thereto with a positive fit, wherein the connection body (4) can be inserted into the connection nozzle (2, 3) and can be locked with a positive fit at least in the insertion direction, and a bar body (13) is provided which can be integrated between the connection body (4) and the connection nozzle (2, 3) in a manner locking these to one another, wherein the connection nozzle (2, 3) comprises at least one inwardly projecting projection (10), and the connection body (4) comprises at least on projection (6) which is arranged on the outer periphery, projects outwards and on which the bar body (13) bears to one side, and wherein at least one outwardly projecting projection (6) is provided on the bar body (13), and wherein by way of rotation of the bar body (13) about the common axis of the connection body (4) and connection nozzle (2, 3), the at least one outwardly projecting projection (16) of the bar body (13) can be moved into a position engaging behind the projection of the connection nozzle (2, 3), **characterised in that** the bar body (13) is designed such that it encompasses the connection body (4) laterally by about 180° with a little play.

2. A bayonet connection according to one of the preceding claims, **characterised in that** the outwardly projecting projection (6) of the connection body (4) is formed by a peripheral annular bead (6).

3. A bayonet connection according to one of the preceding claims, **characterised in that** the inwardly projecting projection (10) is formed by an annular bead (10) which is interrupted in sections.

4. A bayonet connection according to one of the preceding claims, **characterised in that** the inner diameter of the inwardly projecting annular bead (10) is larger than the outer diameter of the outwardly projecting annular bead (6).

5. A bayonet connection according to one of the preceding claims, **characterised in that** two roughly diametrically oppositely arranged projections (16) are provided on the bar body (13) and that with regard to the connection nozzle, accordingly two interruptions (11) are provided in the annular bead (10) in a manner such that the bar body (13) can be inserted into the connection nozzle (2, 3) and can be locked in this by way of rotation.

6. A bayonet connection according to one of the preceding claims, **characterised in that** sealing means (7) are provided between the connection body (4) and the connection nozzle (2, 3).

7. A bayonet connection according to one of the preceding claims, **characterised in that** the connection body (4) close to its free end carries a peripheral sealing ring (7).

8. A bayonet connection according to one of the preceding claims, **characterised in that** the connection body (4) is formed by the free end of a pipe conduit.

9. A bayonet connection according to one of the preceding claims, **characterised in that** the annular bead (6) on the connection body (4) is formed by deformation at the end of a metallic pipe conduit.

10. A bayonet connection according to one of the preceding claims, **characterised in that** it forms part of a construction unit which is constructed from plastic injection moulded parts, for a compact heating assembly.

11. A construction unit for a compact heating assembly with at least on bayonet connection according to one of the preceding claims.

12. A construction unit according to claim 11, **characterised in that** parts of the construction unit (a, 23) are connected to one another by way of a bayonet connection according to one of the claims 1 to 10.

13. A construction unit according to claim 11, **characterised in that** all connection nozzles (2, 3) directed to one side are designed for a bayonet connection according to one of the claims 1 to 10.

## Revendications

1. Raccord à baïonnette comprenant une tubulure de raccordement tubulaire (2, 3) et un corps de raccordement (4) qui peut y être assemblé par liaison mécanique, dans lequel le corps de raccordement (4) peut être emmanché dans la tubulure de raccordement (2, 3) et verrouillé par liaison mécanique, au moins dans la direction de l'emmanchement (12), dans lequel il est prévu un corps de verrouillage (13) qui peut être incorporé entre le corps de raccordement (4) et la tubulure de raccordement (2, 3), en les verrouillant l'un à l'autre, la tubulure de raccordement (2, 3) présente au moins une protubérance (10) en saillie vers l'intérieur et le corps de raccordement (4) présente au moins une protubérance (6) disposée sur la périphérie extérieure et en saillie vers l'extérieur, contre laquelle le corps de verrouillage (13) s'appuie d'un côté, et au moins une protubérance (16) en saillie vers l'extérieur est prévue sur le corps de verrouillage (13), et sous l'effet d'une rotation du corps de verrouillage (13) autour de l'axe commun du corps de raccordement (4) et de la tubulure de raccordement (2, 3), l'au moins une protubérance (16) en saillie vers l'extérieur du corps de verrouillage (13) peut être placée dans une position qui s'accroche derrière la protubérance de la tubulure de raccordement (2, 3), **caractérisé en ce que** le corps de verrouillage (13) est constitué de manière à enserrer latéralement le corps de raccordement (4) sur environ 180° avec un jeu minime.

2. Raccord à baïonnette selon l'une des revendications précédentes, **caractérisé en ce que** la protubérance (6) du corps de raccordement (4) en saillie vers l'extérieur est formée par un bourrelet annulaire périphérique (6).

3. Raccord à baïonnette selon l'une des revendications précédentes, **caractérisé en ce que** la protubérance (10) en saillie vers l'intérieur est formée par un bourrelet annulaire interrompu par endroits.

4. Raccord à baïonnette selon l'une des revendications précédentes, **caractérisé en ce que** le diamètre intérieur du bourrelet annulaire (10) en saillie vers l'intérieur est plus grand que le diamètre extérieur du bourrelet annulaire (6) en saillie vers l'extérieur.

5. Raccord à baïonnette selon l'une des revendications précédentes, **caractérisé en ce que**, sur le corps de verrouillage (13), sont prévues deux protubérances (16) à peu près diamétralement opposées, et **en ce que** deux interruptions (11) du bourrelet annulaire (10) sont prévues de façon correspondante dans la tubulure de raccordement, de telle sorte que le corps de verrouillage (13) peut être emmanché dans la tubulure de raccordement (2, 3) et verrouillé dans cette dernière sous l'effet d'une rotation.

6. Raccord à baïonnette selon l'une des revendications précédentes, **caractérisé en ce que** des joints d'étanchéité (7) sont prévus entre le corps de raccordement (4) et la tubulure de raccordement (2, 3).

7. Raccord à baïonnette selon l'une des revendications précédentes, **caractérisé en ce que** le corps de raccordement (4) porte une bague d'étanchéité périphérique (7) près de son extrémité libre.

8. Raccord à baïonnette selon l'une des revendications précédentes, **caractérisé en ce que** le corps de raccordement (4) est formé par l'extrémité libre d'une conduite tubulaire.

9. Raccord à baïonnette selon l'une des revendications précédentes, **caractérisé en ce que** le bourrelet annulaire (6) du corps de raccordement (4) est formé par une déformation exécutée à l'extrémité d'une conduite tubulaire métallique.

10. Raccord à baïonnette selon l'une des revendications précédentes, **caractérisé en ce qu'**il fait partie d'une unité modulaire de pièces moulées par injection en matière plastique pour groupe de chauffage compact.

11. Unité modulaire pour un groupe de chauffage compact, comportant au moins un raccord à baïonnette selon l'une des revendications précédentes.

12. Unité modulaire selon la revendication 11, **caractérisée en ce que** des parties de l'unité modulaire (1a, 23) sont assemblées entre elles au moyen d'un raccord à baïonnette selon l'une des revendications 1 à 10.

13. Unité modulaire selon la revendication 11, **caractérisée en ce que** toutes les tubulures de raccordement (2, 3) dirigées vers un même côté sont conçues pour un raccord à baïonnette selon l'une des revendications 1 à 10.
